# EUROPEAN PATENT SPECIFICATION

(11) **EP 4 231 116 B1**
(45) Date of publication and mention of the grant of the patent: **06.05.2026**
(21) Application number: 21894918.8
(22) Date of filing: 25.10.2021
(51) Int. Cl.: G06F 1/16, H04R 1/40, H04R 5/02, H04R 1/28, G09F 9/30

(54) **SLIDING TYPE ELECTRONIC DEVICE INCLUDING SPEAKER**
GLEITENDE ELEKTRONISCHE VORRICHTUNG MIT LAUTSPRECHER
DISPOSITIF ÉLECTRONIQUE DE TYPE COULISSANT COMPRENANT UN HAUT-PARLEUR

(30) Priority: 17.11.2020 KR 20200154044; 30.12.2020 KR 20200188081
(43) Date of publication of application: 23.08.2023
(73) Proprietor: Samsung Electronics Co., Ltd., Suwon-si, Gyeonggi-do 16677 (KR)
(72) Inventor: KIM, Bohyeon, Suwon-si, Gyeonggi-do 16677 (KR); KIM, Wankyu, Suwon-si, Gyeonggi-do 16677 (KR); KIM, Hyunsuk, Suwon-si, Gyeonggi-do 16677 (KR); MIN, Byungwoo, Suwon-si, Gyeonggi-do 16677 (KR); LEE, Sangeun, Suwon-si, Gyeonggi-do 16677 (KR); CHO, Joongyeon, Suwon-si, Gyeonggi-do 16677 (KR); CHOI, Junwoo, Suwon-si, Gyeonggi-do 16677 (KR); KANG, Hyunggwang, Suwon-si, Gyeonggi-do 16677 (KR); CHO, Baekeun, Suwon-si, Gyeonggi-do 16677 (KR); HEO, Changryong, Suwon-si, Gyeonggi-do 16677 (KR)
(74) Representative: Gulde & Partner
(86) International application number: PCT/KR2021/014986
(87) International publication number: WO 2022/108147

(56) References cited:
- EP-A1- 3 322 160
- JP-A- 2012 034 120
- KR-A- 20160 136 587
- KR-A- 20170 006 089
- KR-A- 20170 141 438
- KR-B1- 100 677 500
- US-A1- 2017 364 119
- US-A1- 2019 326 718

## Description

### [Technical Field]

Various embodiments of the disclosure relate to an arrangement of speakers of a sliding-type electronic device.

### [Background Art]

Two types of speakers may be arranged in an electronic device such as a smartphone. For example, one speaker may be disposed at the bottom end of the electronic device to serve as a main speaker, and the other speaker may be disposed at the upper end of the front surface of the electronic device to serve as a receiver for transmitting call voice.

The speaker disposed at the lower end of the electronic device is a closed-type speaker and may include an enclosure structure in itself. Such an enclosure structure may play a role in preventing air pressure generated during the operation of the speaker from spreading out to the outside. The enclosure structure of the speaker may play an important role in speaker acoustic performance, and the larger the volume of the enclosure, the better the sound in the low-frequency band.

Meanwhile, the speaker disposed at the top end of the front surface of the electronic device is an open-type speaker and does not have an enclosure structure. Thus, a separate enclosure structure may be required. For example, the open-type speaker may use a partial space inside an electronic device as an enclosure structure.

A mobile terminal in which a size of a displayed screen is adjusted by a user and which includes speakers is known from EP 3 322 160 Al. EP 3 258 675 A1 discloses a twin-housing sliding arrangement wherein a cylindrical roller guides movement of the display.

### [ Disclosure of Invention]

### [Technical Problem]

However, when an electronic device is a sliding-type electronic device, for example, an electronic device that includes a first housing and a second housing, and the second housing slides from the first housing, since a driver (driving unit) configured to provide sliding movement is disposed in the first housing, it may be difficult to arrange speakers due to lack of space to place the speakers.

According to various embodiments of the disclosure, it is possible to provide an electronic device in which a speaker may be arranged by using an inner space of a driver disposed in a housing as an enclosure.

According to various embodiments of the disclosure, it is possible to provide an electronic device in which stereo-speakers may be arranged by using an inner space of a driver disposed in a housing as an enclosure.

According to various embodiments of the disclosure, it is possible to provide an electronic device in which stereo-type speakers may be arranged by using an inner space of a guide member disposed in a housing as an enclosure.

### [Solution to Problem]

The invention is defined by the independent claims. Preferred embodiments of the invention are matter of the dependent claims.

### [Advantageous Effects of Invention]

According to various embodiments of the disclosure, in an electronic device, an inner space of a driver disposed in a housing used is as an enclosure for a speaker so that a space required for disposing a speaker can be reduced.

### [Brief Description of Drawings]

FIG. 1 is a block diagram illustrating an electronic device 101 according to various embodiments in a network environment 100.
FIG. 2 is a plan view illustrating an electronic device according to various embodiments of the disclosure in a slide-in state.
FIG. 3 is a plan view illustrating the electronic device according to various embodiments of the disclosure in a slide-out state.
FIG. 4 is a cross-sectional view taken along the line A-A' of FIG. 3.
FIG. 5 is a plan view illustrating a state in which a conductive connecting member is wound in the electronic device according to various embodiments of the disclosure in the slide-in state.
FIG. 6 is a plan view illustrating the conductive connecting member unwound in the electronic device according to various embodiments of the disclosure in the slide-out state.
FIG. 7 is a perspective view illustrating a roller according to various embodiments of the disclosure including a conductive connecting member wound therearound.
FIG. 8 is a perspective view illustrating the roller according to various embodiments of the disclosure including a conductive connecting member unwound therefrom.
FIG. 9A is a partially cut-away perspective view illustrating a cut roller according to various embodiments of the disclosure.
FIG. 9B is a plan view illustrating the conductive connecting member according to various embodiments of the disclosure.
FIG. 10 is a partially cut-away perspective view illustrating a state in which a sound absorbing material fills the inner space of the roller according to various embodiments of the disclosure.
FIGS. 11A to 11D are exemplary views illustrating respectively speakers arranged in the roller according to various embodiments of the disclosure.
FIG. 12 is a schematic cross-sectional view of an electronic device according to another embodiment of the disclosure in the slide-in state.

### [Best Mode for Carrying out the Invention]

Hereinafter, various embodiments of the disclosure will be described with reference to the accompanying drawings. However, it is to be understood that this description is not intended to limit the disclosure to specific embodiments, and that various modifications and/or alternatives of embodiments of the disclosure are included. In connection with a description made with reference to the drawings, like reference numerals may be used for like elements.

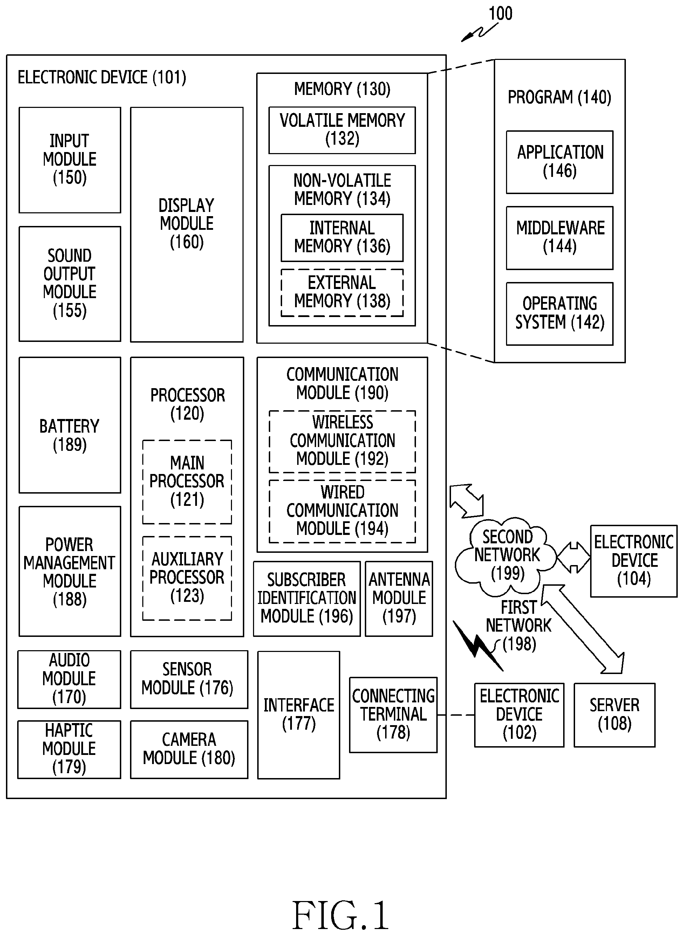

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, or a keyboard.

The sound output device 155 may output sound signals to the outside of the electronic device 101. The sound output device 155 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector),

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module 197 may include one or more antennas, and, therefrom, at least one antenna appropriate for a communication scheme used in the communication network, such as the first network 198 or the second network 199, may be selected, for example, by the communication module 190 (e.g., the wireless communication module 192). The signal or the power may then be transmitted or received between the communication module 190 and the external electronic device via the selected at least one antenna.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

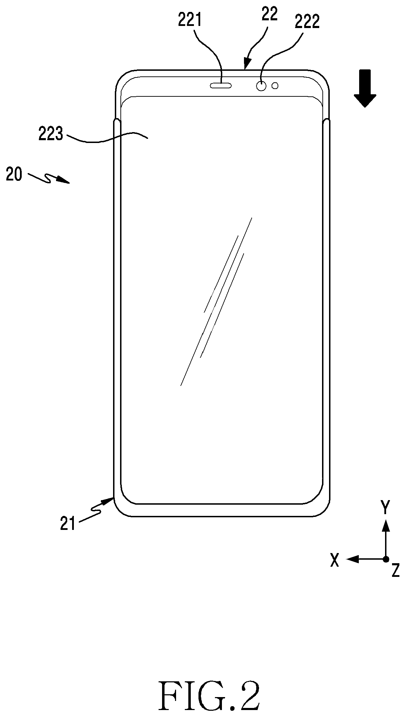

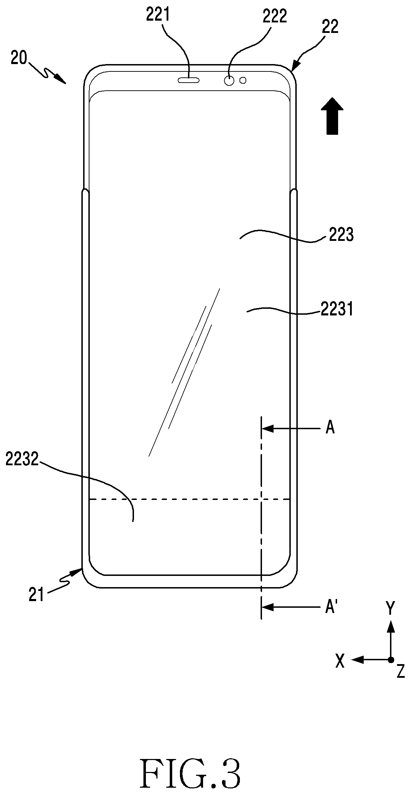

FIG. 2 is a plan view illustrating an electronic device according to various embodiments of the disclosure in a slide-in state. FIG. 3 is a plan view illustrating the electronic device according to various embodiments of the disclosure in a slide-out state.

Referring to FIGS. 2 and 3, according to an embodiment, the electronic device 20 may be substantially the same as the electronic device illustrated in FIG. 1. According to an embodiment, the electronic device may include a smartphone, a tablet personal computer (PC), a mobile phone, an image phone, an e-book reader, a desktop personal computer (PC), a laptop personal computer (PC), a netbook computer, a workstation, a server, a personal digital assistant (PDA), a portable multimedia player (PMP), an MP3 player, a mobile medical device, a camera, or a wearable device (e.g., smart eyeglasses, a head-mounted-device (HMD), an electronic cloth, an electronic bracelet, an electronic necklace, an electronic appcessory, an electronic tattoo, a smart mirror, or a smart watch).

According to an embodiment, the electronic device 20 is a sliding-type electronic device 20 and may include a first housing 21 and a second housing 22. For example, the first housing 21 may include a first frame, a first cover, or a first case. For example, the second housing 22 may include a second frame, a second cover, or a second case.

According to an embodiment, in the electronic device 20, the second housing 22 may perform a slide-in (e.g., a closed mode) or slide-out (e.g., an opened mode) operation in the first housing 21. For example, the second housing 22 may be slid manually, automatically, or semiautomatically. For example, in the case where the sliding method is semi-automatic, when the second housing 22 is slid by a predetermined range or more by a user, the second housing 22 may be slid by an elastic sliding guide member. As another example, in the case where the sliding method is automatic, when a driver is capable of including at least one motor, the second housing 22 may be slid by the power of the motor. As another example, when the sliding method is manual, the second housing 22 may be slid by a user's force.

According to an embodiment, the second housing 22 may be slid into or slid out of the first housing 21 by means of a guide member. According to an embodiment, the second housing 22 may be slid in or out in the state of facing the first housing 21.

According to an embodiment, the second housing 22 may be slid in or slid out along the longitudinal direction of the first housing 21 (e.g., the Y-axis direction). According to an embodiment, the second housing 22 may include at least some of a first speaker module 221, a camera 222, and a flexible display 223. According to an embodiment, the first speaker module 221, for example, a receiver, may be disposed at the upper end of the second housing 22 (e.g., in the Y-axis direction). As another example, the camera 222 may be disposed adjacent to the first speaker module 221. As another example, the first speaker module 221 or the camera 222 may be located under the flexible display 223 (e.g., in the -Z-axis direction).

According to an embodiment, the camera 222 may be disposed to be exposed through the flexible display 223. For example, the camera 222 may be disposed in the inner space of the electronic device 20 to be in contact with the external environment through an opening perforated in the flexible display 223 or a transmission area. According to an embodiment, the area where the flexible display 223 and the camera 222 face each other is a portion of a content display area and may be configured as a transmission area having a predetermined transmittance. According to an embodiment, the transmission area may have a transmittance ranging from about 5% to about 20%. The transmission area may include an area overlapping an effective area (e.g., a field of view area) of the camera 222 through which light imaged by an image sensor to generate an image passes. For example, the transmission area of the flexible display 223 may include an area having a lower pixel density than the periphery. For example, the transmission area may replace the opening. For example, the camera 222 may include an under display camera (UDC).

According to an embodiment, a visually visible display area of the flexible display 223 may be expanded according to the slide-out operation. According to an embodiment, a portion of the flexible display 223 may be moved into the first housing 21 or moved out of the first housing 21 by the guide member.

According to an embodiment, the display area of the flexible display 223 may include a first display area 2231 that is always exposed and a second display area 2232 that is variable depending on the slide-in or slide-out of the second housing 22. According to an embodiment, the second display area 2232 may be a display area expanded in response to the slide-out of the second housing 22.

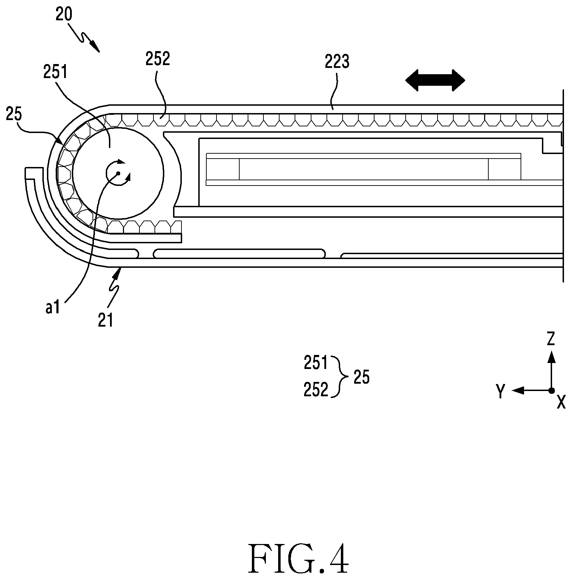

FIG. 4 is a cross-section view taken along the line A-A' of FIG. 3.

Referring to FIG. 4, in the electronic device 20 according to an embodiment, the second housing 22 may slide into or slide out of the first housing 21. While the second housing 22 slides on the first housing 20, the guide member 25 may guide the winding or unwinding of the flexible display 223.

According to an embodiment, the guide member 25 may be a single member or may be configured through assembly of multiple members. According to an embodiment, the guide member 25 may include a roller 251 and a multi-bar support 252. In an embodiment, when the second housing (e.g., the second housing 22 illustrated in FIG. 3) automatically slides in or slides out, a drive motor (not illustrated) may be further included. According to an embodiment, the guide member 25 may include a roller 251 configured to support at least a portion of the flexible display 223 and to be capable of guiding the movement of the multi-bar support 252 so that the flexible display 223 can be at least partially moved.

According to an embodiment, the roller 251 has a cylindrical shape and may be rotated by the sliding of the second housing (e.g., the second housing 22 illustrated in FIG. 3). According to an embodiment, the guide member 25 may include a multi-bar support 252 disposed on the outer circumferential surface of the roller 251 to be engaged with the roller 251. According to an embodiment, at least a portion of the multi-bar support 252 may be connected to the roller 251 and may be moved out of the first housing 21 or moved into the first housing 21 according to the rotation of the roller 251. According to an embodiment, the multi-bar support 252 may support the flexible display 223 during a slide-in or slide-out operation of the second housing (e.g., the second housing 22 illustrated in FIG. 3).

According to an embodiment, the roller 251 may include at least one speaker. According to an embodiment, the roller 251 may have a cylindrical shape including a through hole, and at least one speaker may be disposed inside the through hole.

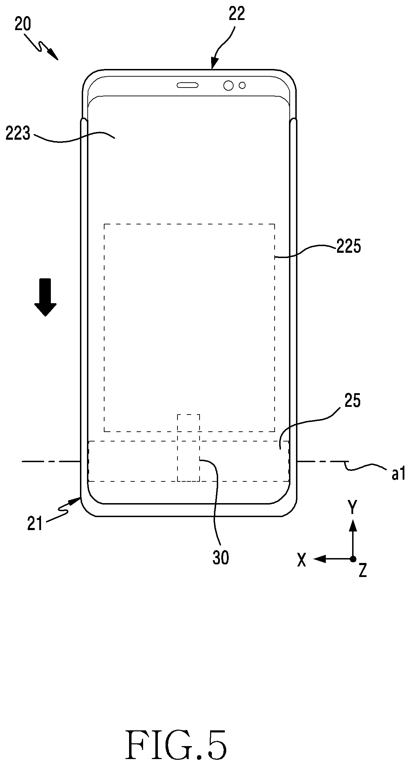

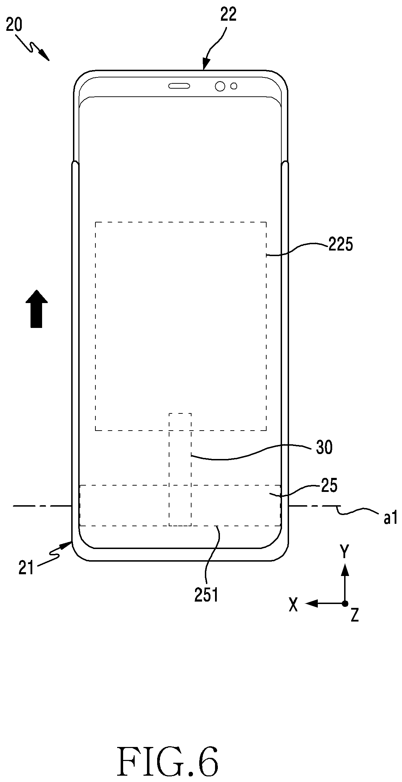

FIG. 5 is a plan view illustrating a state in which at least a portion of a conductive connecting member is wound around a roller in the electronic device according to various embodiments of the disclosure in the slide-in state. FIG. 6 is a plan view illustrating at least a portion of the conductive connecting member unwound from the roller in the electronic device according to various embodiments of the disclosure in the slide-out state.

Referring to FIGS. 5 and 6, according to an embodiment, a guide member 25 may be disposed at a lower end of the first housing 21 (e.g., in the -Y axis direction). According to an embodiment, the second housing 22 may include a circuit board 225. According to an embodiment, the circuit board 225 may move together with the second housing 22 to move away from the guide member 25 according to the slide-out of the second housing 22 and may come close to the guide member 25 by the slide-in of the second housing 22. According to an embodiment, the circuit board 225 and the guide member 25 may be electrically connected to each other by a conductive connecting member 30. According to an embodiment, the conductive connecting member 30 may be unwound from the roller 251 included in the guide member 25 by the slide-out of the second housing 22 or may be partially wound around the roller 251 by the slide-in of the second housing 22. For example, depending on the sliding of the second housing 22, at least a portion of the conductive connecting member 30 may be curved, bent, rolled, or wound.

According to an embodiment, the roller 251 of the guide member 25 may be disposed at the lower end of the first housing 21 to be rotatable about a rotary axis a1. According to an embodiment, the roller 251 may be disposed to be oriented in a direction (e.g., the X-axis direction) substantially perpendicular to the sliding direction (e.g., the Y-axis direction) of the second housing 22.

According to an embodiment, the conductive connecting member 30 may include a flexible printed circuit board (FPCB) or a cable. The conductive connecting member 30 may be electrically connected to at least one speaker (not illustrated) included in the roller 251.

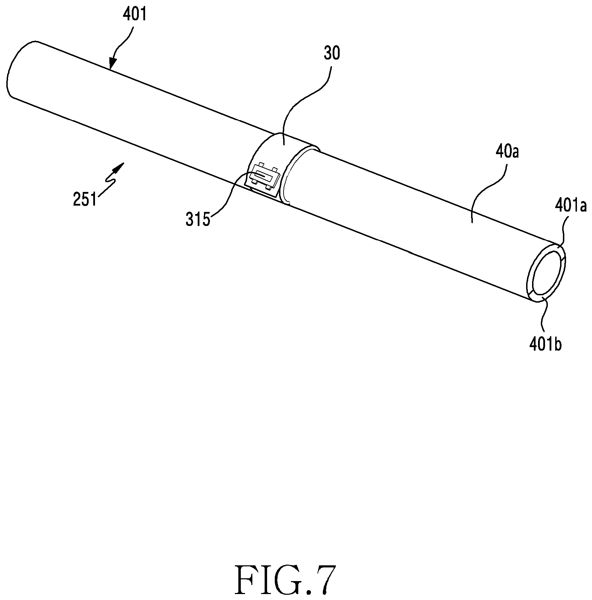

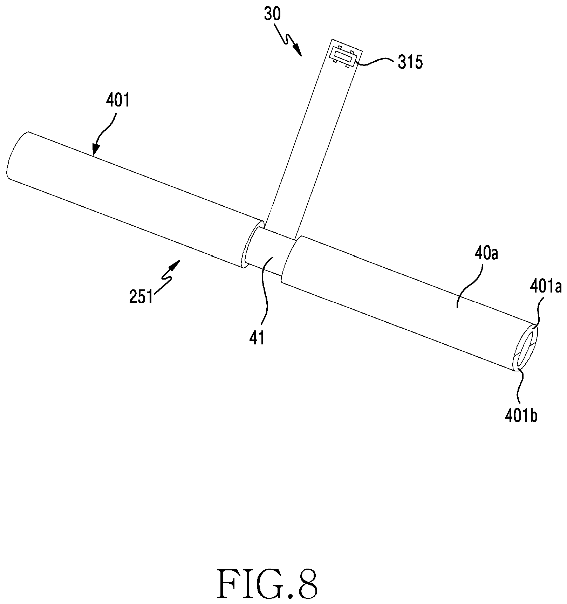

FIG. 7 is a perspective view illustrating the conductive connecting member wound around the roller according to various embodiments of the disclosure. FIG. 8 is a perspective view illustrating the conductive connecting member unwound from the roller according to various embodiments of the disclosure.

Referring to FIGS. 7 and 8, according to an embodiment, the roller 251 has a substantially cylindrical shape and may be disposed in the first housing (e.g., the first housing 21 illustrated in FIG. 5) to be rotatable about a first rotary axis (e.g., the rotary axis a1 illustrated in FIG. 5). According to an embodiment, the roller 251 does not need to be limited to the cylindrical shape, and may have a semi-cylindrical shape or may be configured in a column type having any polygonal cross section.

According to an embodiment, the roller 251 may include a roller housing 401 and one or more speakers disposed in the inner space of the roller housing 401. According to an embodiment, the roller housing 401 may include a groove 41 so that the conductive connecting member 30 is wound on the outer circumferential surface 40a. According to an embodiment, the groove 41 has been illustrated as being formed in the middle portion of the roller housing 401, but it is not necessary to be limited to this formation position. The groove 41 may be provided close to one side or the other side of the roller housing 401. According to an embodiment, the groove 41 is recessed to a predetermined depth and may be provided in a ring shape. According to an embodiment, the groove 41 may be configured such that, when the electronic device (e.g., the electronic device 20 illustrated in FIG. 5) is in the slide-in state and the conductive connecting member 30 is wound around the roller 251, the height of the wound conductive connecting member 30 is not higher than the outer circumferential surface 40a.

According to an embodiment, the roller housing 401 is cylindrical, and its inner space may be used as an enclosure acoustic resonance space of the speakers.

According to an embodiment, the conductive connecting member 30 may include a connector 315 to be connected to the circuit board 225.

According to an embodiment, when an electronic device (e.g., the electronic device 20 illustrated in FIG. 5) is in the slide-in state, at least a portion of the conductive connecting member 30 may be wound around the groove 41 of the roller 251 as illustrated in FIG. 7. As another example, when the electronic device 20 is in the sliding-out state, at least a portion of the conductive connecting member 30 may be unwound from the roller 251 as illustrated in FIG. 8.

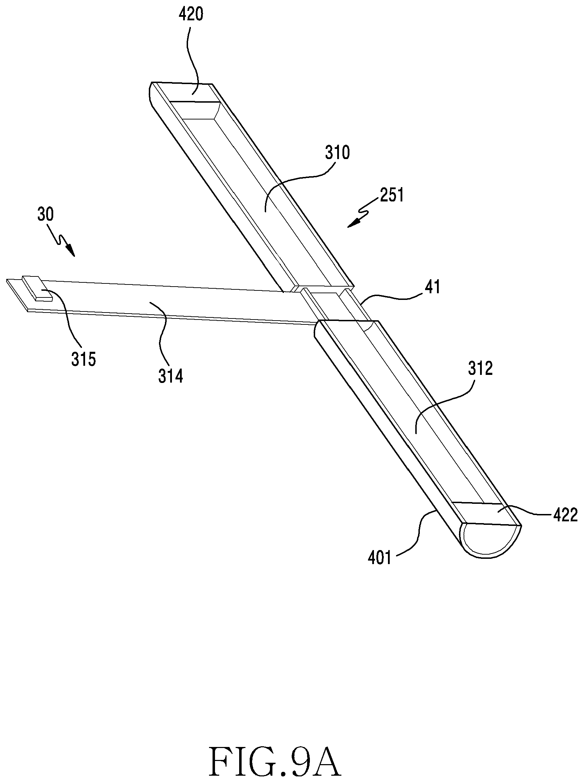

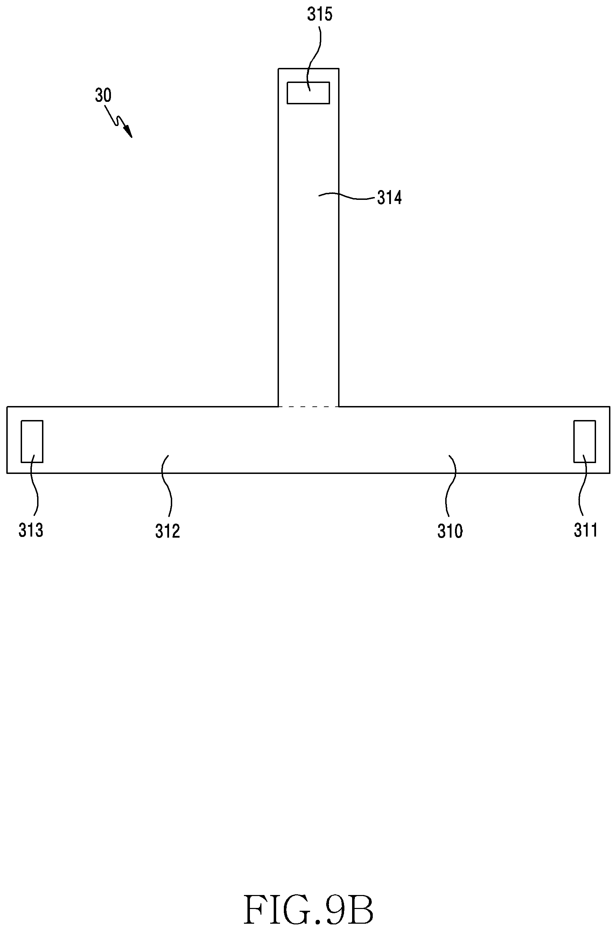

FIG. 9A is a partially cut-away perspective view illustrating a cut roller according to various embodiments of the disclosure. FIG. 9B is a plan view illustrating the conductive connecting member according to various embodiments of the disclosure.

Referring to FIGS. 9A and 9B, according to an embodiment, the conductive connecting member 30 (a flexible printed circuit board (FPCB)) is a connecting member that may be wound around or unwound from the groove 41 of the roller housing 401 and may include a first portion 310, 312 disposed inside the roller housing 401 and a second portion 314 disposed outside the roller housing 401. According to an embodiment, the first portion 310, 312 may include a (1-1)^{th} portion 310 or a (1-2)^{th} portion 312.

According to an embodiment, one end of the first portion 310, 312 may be disposed at one side of the roller housing 401 and the other end may be disposed on the other side of the roller housing 401. According to an embodiment, the second portion 314 branches from the first portion 310, 312 and may extend in a direction substantially perpendicular to the first portion 310, 312 at approximately the midpoint of the first portion 310, 312. The branching point of the second portion 314 does not need to be limited to the middle portion of the first portion 310, 312. The branching point of the second portion 314 may be located at a place close to one end or the other end of the roller housing.

According to an embodiment, the roller housing 401 may include a first roller housing portion (e.g., the first roller housing portion 401a illustrated in FIGS. 7 and 8) or a second roller housing portion (e.g., the second roller housing portion 401b illustrated in FIGS. 7 and 8), and be configured as a coupling structure of the first roller housing portion (e.g., the first roller housing portion 401a illustrated in FIGS. 7 and 8) or the second roller housing part (e.g., the second roller housing portion 401b illustrated in FIGS. 7 and 8). For example, after the first portion 310, 312 of the conductive connecting member 30 are disposed in the first roller housing portion, the second roller housing portion may be coupled, and the inner space may be sealed by a sealing structure such that the inner space can be used as an enclosure space for a speaker.

According to an embodiment, a first speaker 420 or a second speaker 422 may be disposed on each of opposite sides of the roller 251 with reference the groove 41 of the roller housing 401. According to an embodiment, the first speaker 420 and the second speaker 422 may emit sound in opposite directions, respectively. According to an embodiment, the roller 251 may have a structure in which the inner space in which the first speaker 420 is located and the inner space in which the second speaker 422 is located are isolated from each other.

According to an embodiment, the conductive connecting member 30 may include one or more connectors 311, 313, and 315. According to an embodiment, the conductive connecting member 30 may include a first connector 311 disposed in the (1-1)^{th} portion 310 and connected to the first speaker 420, a second connector 311 disposed in the (1-2)^{th} portion 312 and connected to the second speaker 422, and a third connector 311 disposed in the second portion 314 and connected to the circuit board 225.

According to an embodiment, when only the first speaker 420 is disposed in the roller 251, the (1-2)^{th} portion 312 of the first portion 310, 312 may be omitted and only the (1-1)^{th} portion 310 may be included.

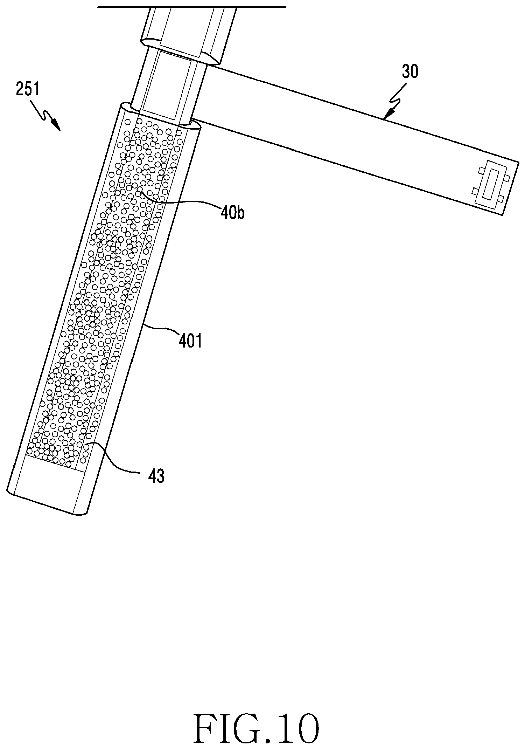

FIG. 10 is a partially cut-away perspective view illustrating a state in which a sound absorbing material fills the inner space of the roller according to various embodiments of the disclosure.

Referring to FIG. 10, in the roller 251 according to an embodiment, a sound absorbing material 43 may fill the inner space 40b of the roller housing 401. For example, the sound absorbing material 43 may partially fill or entirely fill the inner space 40b of the roller 251. According to an embodiment, the sound absorbing material 43 absorbs sound waves to reduce the magnitude of sound and vibration, thereby improving low-pitched sound characteristics. For example, the sound absorbing material 43 may include a foamed resin material such as a sponge. In an embodiment, the sound absorbing material 43 may partially or entirely fill the inside of the roller 251 in the form of multiple fine grains.

According to an embodiment, the sound absorbing material 43 may at least partially or entirely fill the space where the first speaker 420 is located or the space where the second speaker 422 is located.

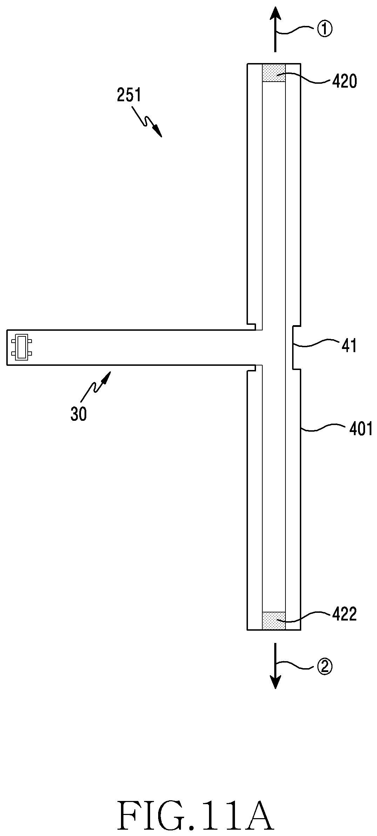

FIGS. 11A to 11D are exemplary views illustrating speakers arranged in the roller according to various embodiments of the disclosure.

Referring to FIGS. 11A to 11D, in the roller according to an embodiment, one or more speakers may be disposed at various positions.

Referring to FIG. 11A, the speakers disposed in the roller 251 according to an embodiment may include a first speaker 420 or a second speaker 422 disposed in the roller housing 401. For example, the first speaker 420 or the second speaker 422 may include a coin-type speaker.

According to an embodiment, the first speaker 420 may be disposed to emit sound in a first direction ① oriented to be substantially perpendicular to the sliding direction of the second housing (e.g., the second housing 22 illustrated in FIG. 6), and the second speaker 422 may be disposed to emit sound in a second direction ② oriented opposite to the first direction ①. According to an embodiment, the first speaker 420 and the second speaker 422 may be arranged to be symmetrical to each other. According to an embodiment, the first speaker 420 may use the inner space at one side of the roller housing 401 as an acoustic resonance space, and the second speaker 422 may use the inner space at the other side of the roller housing 401 as an acoustic resonance space.

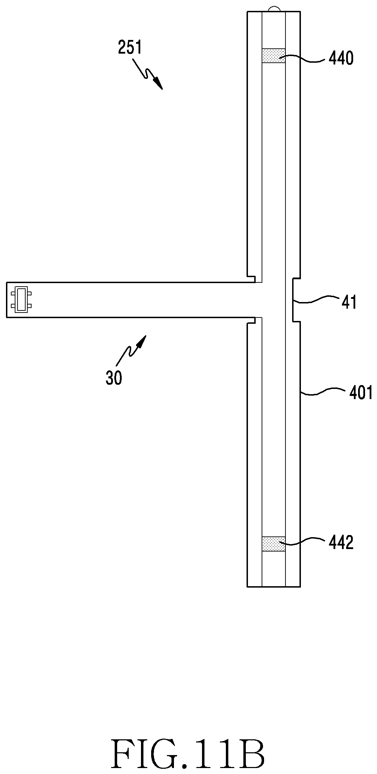

Referring to FIG. 11B, according to an embodiment, a first speaker 420 or a second speaker 422 arranged in the roller housing 401 of the roller 251 may be disposed at a place shifted closer to the midpoint (e.g., the groove 41) from each of the opposite ends of the roller housing 401 compared to the first speaker 420 or the second speaker 422 arranged as described in FIG. 11A. According to an embodiment, the first speaker 420 or the second speaker 422 may be at an optimal position after the arrangement position thereof is adjusted according to an audio tuning result.

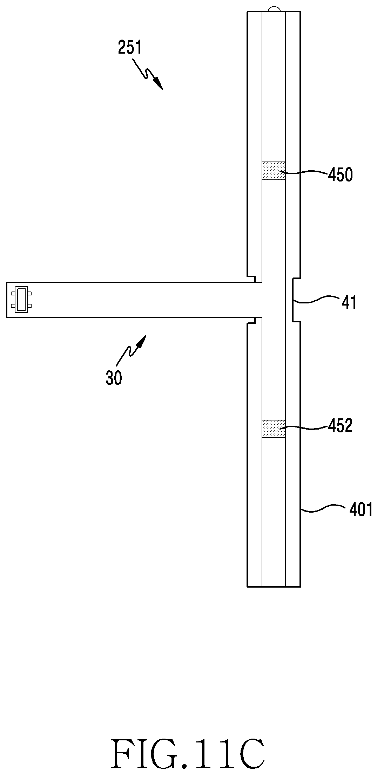

Referring to FIG. 11C, according to an embodiment, the first speaker 420 or the second speaker 422 arranged in the roller housing 401 of the roller 251 may be disposed at a place shifted closer to the midpoint from each of the opposite ends of the roller housing 401 compared to the first speaker 420 or the second speaker 422 arranged as described in FIG. 11B.

According to an embodiment, the first speaker 450 may be disposed between one end and the middle portion of the roller housing 401, and the second speaker 452 may be disposed between the other end and the middle portion of the roller housing 401. For example, the first speaker 420 or the second speaker 422 may be disposed close to the midpoint or far from the midpoint, and the arrangement thereof may be adjusted according to an audio tuning result.

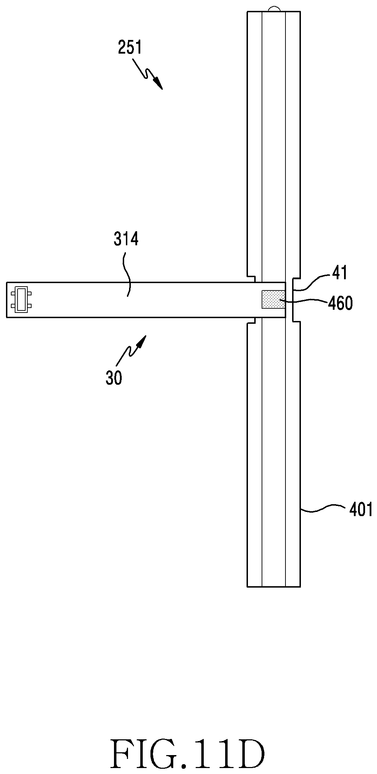

Referring to FIG. 11D, according to an embodiment, one speaker 460 may be disposed in the roller housing 401 of the roller 251. According to an embodiment, the speaker 460 may be disposed at the midpoint of the roller housing 401, and the first portion 310, 312 of the conductive connecting member 30 may be substantially omitted. For example, the speaker 460 may be disposed in the second portion 314 of the conductive connecting member 30. In an embodiment, the speaker 460 may be a unidirectional speaker configured to emit sound in one direction (e.g., the first direction ① or the second direction ②) or a bidirectional speaker configured to emit sound in two directions (e.g., the first direction ① and the second direction ②). According to an embodiment, the speaker 460 may use the entire inner space of the roller housing 401 as an enclosure space and an acoustic resonance space.

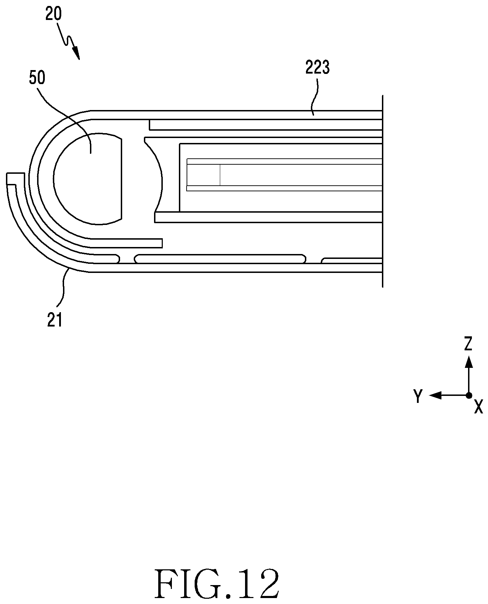

FIG. 12 is a schematic cross-sectional view of an electronic device according to another embodiment of the disclosure in the slide-in state.

Referring to FIG. 12, an electronic device 20 according to an embodiment is different from the electronic device 20 illustrated in FIG. 4 only in the configuration of the guide member 50, and the other structures are substantially the same. Thus, the description of the other structures will be omitted to avoid redundant description.

The guide member 25 illustrated in FIG. 4 according to an embodiment includes the rotatable roller 251, but the guide member 50 illustrated in FIG. 12 may not include a rotating component. According to an embodiment, the guide member 50 may be fixed to the first housing 21 by a coupling structure (not illustrated). According to an embodiment, the guide member 50 may guide the movement of at least a portion of the flexible display 223. According to an embodiment, the flexible display 223 may be slid into or slid out of the first housing 21 by a driving source (not illustrated). According to an embodiment, the flexible display may be guided in moving direction by the guide member 50 during sliding.

For example, the guide member 50 may have either a cylindrical shape or a semi-cylindrical shape. According to an embodiment, the guide member 50 may be disposed in the inner space in substantially the same manner as the speakers and the conductive connecting member 30 disposed in the roller 251 illustrated in FIGS. 7 to 11D. However, since the guide member 50 does not rotate, structures for rotation such as the groove 41 in the guide member 25 may be omitted or configured differently. As another example, since the second portion 314 of the conductive connecting member 30, which is wound or unwound when the roller 251 rotates, is not wound or unwound in the embodiment of FIG. 12, the length or material of the second portion 314 may be implemented differently.

According to an embodiment, an electronic device (e.g., the electronic device 20 illustrated in FIG. 2) may include a first housing (e.g., the first housing 21 illustrated in FIG. 2), a second housing (e.g., the second housing 22 illustrated in FIG. 2) including a circuit board (e.g., the circuit board 225 illustrated in FIG. 5) and configured to be slidable with respect to the first housing (e.g., the first housing 21 illustrated in FIG. 2), a display (e.g., the display 223 illustrated in FIG. 2) on which a partial area of the second housing (e.g., the second housing 22 illustrated in FIG. 2) is disposed, a guide member (e.g., the guide member 25 illustrated in FIG. 4) disposed in the first housing (e.g., the first housing 21 illustrated in FIG. 2) and configured to guide rolling of a partial area of the display (e.g., the display 223 illustrated in FIG. 2) in response to the sliding of the second housing (e.g., the second housing 22 illustrated in FIG. 2), one or more speakers (e.g., the speakers 420 and 422 illustrated in FIG. 9A) disposed inside the guide member (e.g., the guide member 25 illustrated in FIG. 4), and a conductive connecting member (e.g., the conductive connecting member 30 illustrated in FIG. 9B) disposed on the guide member (e.g., the guide member 25 illustrated in FIG. 4) to be wound or unwound and electrically connecting the speakers (e.g., the speakers 420 and 422 illustrated in FIG. 9A) to the circuit board (e.g., the circuit board 225 illustrated in FIG. 5).

According to an embodiment, the guide member (e.g., the guide member 25 illustrated in FIG. 4) may be disposed at one end of the first housing (e.g., the first housing 21 illustrating in FIG. 2) to be rotatable about a rotary axis oriented in a direction perpendicular to the sliding direction of the second housing (e.g., the second housing 22 illustrated in FIG. 2).

According to an embodiment, the guide member (e.g., the guide member 25 illustrated in FIG. 4) may include a roller (e.g., the roller 251 illustrated in FIG. 7), and the roller (e.g., the roller 251 illustrated in FIG. 7) may be disposed to be rotatable coaxially with the guide member (e.g., the guide member 25 illustrated in FIG. 4).

According to an embodiment, the roller (e.g., the roller 251 illustrated in FIG. 7) may be cylindrical.

According to an embodiment, the roller (e.g., the roller 251 illustrated in FIG. 7) may further include a cylindrical roller housing (e.g., the roller housing 401 illustrated in FIG. 7) including an enclosure space for the speakers (e.g., the speakers 420 and 422 illustrated in FIG. 9A).

According to an embodiment, the speakers (e.g., the speakers 420 and 422 illustrated in FIG. 9A) may include a first speaker (e.g., the speaker 420 illustrated in FIG. 9A) disposed in the cylindrical roller housing (e.g., the roller housing 401 illustrated in FIG. 7) to emit sound in a first direction oriented in the direction perpendicular to the sliding direction of the second housing (e.g., the second housing 22 illustrated in FIG. 2), and a second speaker (e.g., the speaker 422 illustrated in FIG. 9A) disposed in the cylindrical roller housing (e.g., the roller housing 401 illustrated in FIG. 7) opposite to the first speaker (e.g., the speaker 420 illustrated in FIG. 9A) and disposed to emit sound in a second direction opposite to the first direction.

According to an embodiment, the roller housing (e.g., the roller housing 401 illustrated in FIG. 7) may include a groove (e.g., the groove 41 illustrated in FIG. 8) recessed in the circumferential outer surface thereof such that the conductive connecting member (e.g., the conductive connecting member 30 illustrated in FIG. 9b) is wound to or unwound from the groove.

According to an embodiment, the conductive connecting member (e.g., the conductive connecting member 30 illustrated in FIG. 9B) may include a first portion (e.g., the first portion 310, 312 illustrated in FIG. 9B) located inside the roller housing (e.g., the roller housing 401 illustrated in FIG. 7); and a second portion (e.g., the first portion 314 illustrated in FIG. 9B) branched from the first portion (e.g., the first portion 310, 312 illustrated in FIG. 9B) and located outside the roller housing (e.g., the roller housing 401 illustrated in FIG. 7) to be wound to or unwound from the groove (e.g., the groove 41 illustrated in FIG. 8)

According to an embodiment, the conductive connecting member (e.g., the conductive connecting member 30 illustrated in FIG. 9B) includes three connectors (e.g., the connectors 311, 313, and 315 illustrated in FIG. 9B). The three connectors may include a first connector (e.g., the first connector 311 illustrated in FIG. 9B) disposed at one end of the first portion (e.g., the first portion 310, 312 illustrated in FIG. 9B) and connected to the first speaker (e.g., the first speaker 420 illustrated in FIG. 9A), a second connector (e.g., the second connector 313 illustrated in FIG. 9B) disposed at the other end of the first portion (e.g., the first portion 310, 312 illustrated in FIG. 9B) and connected to the second speaker (e.g., the speaker 422 illustrated in FIG. 9A), and a third connector (e.g., the third connector 315 illustrated in FIG. 9B) disposed at an end of the second portion (e.g., the first portion 314 illustrated in FIG. 9B) and connected to the circuit board (e.g., the circuit board 225 illustrated in FIG. 5).

According to an embodiment, the speakers (e.g., the speakers 420 and 422 illustrated in FIG. 9A) may be configured to use the inner space of the guide member (e.g., the guide member 25 illustrated in FIG. 4 ) as an enclosure acoustic resonance section.

According to an embodiment, the second housing (e.g., the second housing 22 illustrated in FIG. 2) may be in a slide-in or slide-out state along the longitudinal direction of the first housing (e.g., the first housing 21 illustrated in FIG. 2).

According to an embodiment, the roller housing (e.g., the roller housing 401 illustrated in FIG. 7) may include a sound absorbing material (e.g., the sound absorbing material 43 illustrated in FIG. 10) in the inner space.

According to an embodiment, an electronic device (e.g., the electronic device 20 illustrated in FIG. 2) may include a housing; a driver disposed in the housing; and one or more speakers (e.g., the speakers 420 and 422 illustrated in FIG. 9A) that are coaxially disposed within the driver and configured to use an inner space of the driver as an enclosure acoustic resonance space.

According to an embodiment, the driver may be a rolling driver, and the rolling driver may include a roller (e.g., the roller 251 illustrated in FIG. 7),the roller (e.g., the roller 251 illustrated in FIG. 7) may further include a cylindrical roller housing (e.g., the roller housing 401 illustrated in FIG. 7) including an enclosure space for the speakers (e.g., the speakers 420 and 422 illustrated in FIG. 7), and the speakers (e.g., the speakers 420 and 422 illustrated in FIG. 9A) may be disposed in the cylindrical roller housing (e.g., the roller housing 401 illustrated in FIG. 7).

According to an embodiment, the speakers (e.g., the speakers 420 and 422 illustrated in FIG. 9A) may include a first speaker (e.g., the speaker 420 illustrated in FIG. 9A) disposed in the cylindrical roller housing (e.g., the roller housing 401 illustrated in FIG. 7) to emit sound in a first direction oriented in the direction perpendicular to the sliding direction of the second housing (e.g., the second housing 22 illustrated in FIG. 2), and a second speaker (e.g., the speaker 422 illustrated in FIG. 9A) disposed in the cylindrical roller housing (e.g., the roller housing 401 illustrated in FIG. 7) opposite to the first speaker (e.g., the speaker 420 illustrated in FIG. 9A) and disposed to emit sound in a second direction opposite to the first direction.

## Claims

1. An electronic device (101, 102, 104) comprising:
a first housing (21);
a second housing (22) comprising a circuit board (225) and configured to be slidable with respect to the first housing (21);
a display (223) on which a partial area of the second housing (22) is disposed;
a guide member (25) disposed in the first housing (21) and comprising a roller (251) configured to guide rolling of a partial area of the display (223) in response to the sliding of the second housing (22);
one or more speakers (420, 422, 460) disposed inside the guide member (25); and
a conductive connecting member (30) configured to be wound or unwound with respect to the roller (251) and electrically connecting the one or more speakers (420, 422, 460) to the circuit board (225).

2. The electronic device (101, 102, 104) of claim 1, wherein the guide member (25) is disposed at one end of the first housing (21) and wherein the roller (251) is rotatable about a rotary axis (a1) oriented in a direction perpendicular to a sliding direction of the second housing (22).

3. The electronic device (101, 102, 104) of claim 2, wherein the roller (251) is disposed to be rotatable coaxially with the guide member (25).

4. The electronic device (101, 102, 104) of claim 3, wherein the roller (251) is cylindrical.

5. The electronic device (101, 102, 104) of claim 4, wherein the roller (251) further comprises a cylindrical roller housing (401) comprising an enclosure space for the one or more speakers (420, 422, 460).

6. The electronic device (101, 102, 104) of claim 5, wherein the one or more speakers (420, 422, 460) comprise:
a first speaker (420, 450) disposed in the cylindrical roller housing (401) and disposed to emit sound in a first direction oriented in the direction perpendicular to the sliding direction of the second housing (22); and
a second speaker (422, 452) disposed in the cylindrical roller housing (401) opposite to the first speaker (420, 450) and disposed to emit sound in a second direction opposite to the first direction.

7. The electronic device (101, 102, 104) of claim 5, wherein the roller housing (401) comprises a groove (41) recessed in an outer circumferential surface (40a) thereof such that the conductive connecting member (30) is wound to or unwound from the groove (41).

8. The electronic device (101, 102, 104) of claim 7, wherein the conductive connecting member (30) comprises:
a first portion (310, 312, 314) located inside the roller housing (401); and
a second portion branched from the first portion (310, 312, 314) and located outside the roller housing (401) to be wound to or unwound from the groove (41).

9. The electronic device (101, 102, 104) of claim 8, wherein the conductive connecting member (30) comprises three connectors (311, 313, 315) comprising:
a first connector (311, 313, 315) disposed at one end of the first portion (310, 312, 314) and connected to the first speaker (420, 450);
a second connector (313) disposed at the other end of the first portion (310, 312, 314) and connected to the second speaker (422, 452); and
a third connector (315) disposed at an end of the second portion and connected to the circuit board (225).

10. The electronic device (101, 102, 104) of claim 1, wherein the one or more speakers (420, 422, 460) are configured to use an inner space (40b) of the guide member (25) as an enclosure acoustic resonance section.

11. The electronic device (101, 102, 104) of claim 1, wherein the second housing (22) is configured to slide in or out along a longitudinal direction of the first housing (21).

12. The electronic device (101, 102, 104) of claim 5, wherein the roller housing (401) comprises a sound absorbing material (43) in the inner space (40b).

## Patentansprüche

1. Elektronische Vorrichtung (101, 102, 104), umfassend:
ein erstes Gehäuse (21);
ein zweites Gehäuse (22), das eine Leiterplatte (225) umfasst und konfiguriert ist, um in Bezug auf das erste Gehäuse (21) verschiebbar zu sein;
eine Anzeige (223), auf welcher ein Teilbereich des zweiten Gehäuses (22) angeordnet ist;
ein Führungselement (25), das in dem ersten Gehäuse (21) angeordnet ist und eine Rolle (251) umfasst, die konfiguriert ist, um ein Rollen eines Teilbereichs der Anzeige (223) in Reaktion auf das Gleiten des zweiten Gehäuses (22) zu führen;
ein oder mehrere Lautsprecher (420, 422, 460), die innerhalb des Führungselements (25) angeordnet sind; und
ein leitfähiges Verbindungselement (30), das konfiguriert ist, um in Bezug auf die Rolle (251) aufgewickelt oder abgewickelt zu werden und den einen oder die mehreren Lautsprecher (420, 422, 460) mit der Leiterplatte (225) elektrisch verbindet.

2. Elektronische Vorrichtung (101, 102, 104) nach Anspruch 1, wobei das Führungselement (25) an einem Ende des ersten Gehäuses (21) angeordnet ist und wobei die Rolle (251) um eine Drehachse (a1) drehbar ist, die in einer zu einer Gleitrichtung des zweiten Gehäuses (22) senkrechten Richtung orientiert ist.

3. Elektronische Vorrichtung (101, 102, 104) nach Anspruch 2, wobei die Rolle (251) angeordnet ist, um koaxial mit dem Führungselement (25) drehbar zu sein.

4. Elektronische Vorrichtung (101, 102, 104) nach Anspruch 3, wobei die Rolle (251) zylindrisch ist.

5. Elektronische Vorrichtung (101, 102, 104) nach Anspruch 4, wobei die Rolle (251) ferner ein zylindrisches Rollengehäuse (401) umfasst, das einen Einschlussraum für den einen oder die mehreren Lautsprecher (420, 422, 460) umfasst.

6. Elektronische Vorrichtung (101, 102, 104) nach Anspruch 5, wobei der eine oder die mehreren Lautsprecher (420, 422, 460) umfassen:
einen ersten Lautsprecher (420, 450), der in dem zylindrischen Rollengehäuse (401) angeordnet ist und angeordnet ist, um Schall in einer ersten Richtung auszusenden, die in der zu der Gleitrichtung des zweiten Gehäuses (22) senkrechten Richtung orientiert ist; und
einen zweiten Lautsprecher (422, 452), der in dem zylindrischen Rollengehäuse (401) gegenüberliegend zu dem ersten Lautsprecher (420, 450) angeordnet ist und angeordnet ist, um Schall in einer zweiten Richtung auszusenden, die der ersten Richtung gegenüberliegt.

7. Elektronische Vorrichtung (101, 102, 104) nach Anspruch 5, wobei das Rollengehäuse (401) eine Nut (41) umfasst, die in deren Außenumfangsfläche (40a) vertieft ist, so dass das leitfähige Verbindungselement (30) auf die Nut (41) aufgewickelt oder von der Nut (41) abgewickelt wird.

8. Elektronische Vorrichtung (101, 102, 104) nach Anspruch 7, wobei das leitfähige Verbindungselement (30) umfasst:
einen ersten Abschnitt (310, 312, 314), der sich innerhalb des Rollengehäuses (401) befindet; und
einen zweiten Abschnitt, der von dem ersten Abschnitt (310, 312, 314) abgezweigt ist und sich außerhalb des Rollengehäuses (401) befindet, um auf die Nut (41) aufgewickelt oder von der Nut (41) abgewickelt zu werden.

9. Elektronische Vorrichtung (101, 102, 104) nach Anspruch 8, wobei das leitfähige Verbindungselement (30) drei Verbinder (311, 313, 315) umfasst, umfassend:
einen ersten Verbinder (311, 313, 315), der an einem Ende des ersten Abschnitts (310, 312, 314) angeordnet ist und mit dem ersten Lautsprecher (420, 450) verbunden ist;
einen zweiten Verbinder (313), der an dem anderen Ende des ersten Abschnitts (310, 312, 314) angeordnet ist und mit dem zweiten Lautsprecher (422, 452) verbunden ist; und
einen dritten Verbinder (315), der an einem Ende des zweiten Abschnitts angeordnet ist und mit der Leiterplatte (225) verbunden ist.

10. Elektronische Vorrichtung (101, 102, 104) nach Anspruch 1, wobei der eine oder die mehreren Lautsprecher (420, 422, 460) konfiguriert sind, um einen Innenraum (40b) des Führungselements (25) als einen Gehäuse-Akustikresonanzabschnitt zu verwenden.

11. Elektronische Vorrichtung (101, 102, 104) nach Anspruch 1, wobei das zweite Gehäuse (22) konfiguriert ist, um entlang einer Längsrichtung des ersten Gehäuses (21) hinein- oder herauszugleiten.

12. Elektronische Vorrichtung (101, 102, 104) nach Anspruch 5, wobei das Rollengehäuse (401) ein schallabsorbierendes Material (43) in dem Innenraum (40b) umfasst.

## Revendications

1. Dispositif électronique (101, 102, 104) comprenant :
un premier boîtier (21) ;
un second boîtier (22) comprenant une carte de circuit (225) et configuré pour être coulissant par rapport au premier boîtier (21) ;
un écran (223) sur lequel est disposée une zone partielle du second boîtier (22) ;
un élément de guidage (25) disposé dans le premier boîtier (21) et comprenant un rouleau (251) configuré pour guider le roulement d'une zone partielle de l'écran (223) en réponse au coulissement du second boîtier (22) ;
un ou plusieurs haut-parleurs (420, 422, 460) disposés à l'intérieur de l'élément de guidage (25) ; et
un élément de connexion conducteur (30) configuré pour être enroulé ou déroulé par rapport au rouleau (251) et reliant électriquement l'un ou les haut-parleurs (420, 422, 460) à la carte de circuit (225).

2. Dispositif électronique (101, 102, 104) selon la revendication 1, dans lequel l'élément de guidage (25) est disposé à une extrémité du premier boîtier (21) et dans lequel le rouleau (251) est monté rotatif autour d'un axe de rotation (a1) orienté dans une direction perpendiculaire à une direction de coulissement du second boîtier (22).

3. Dispositif électronique (101, 102, 104) selon la revendication 2, dans lequel le rouleau (251) est disposé pour être rotatif coaxialement avec l'élément de guidage (25).

4. Dispositif électronique (101, 102, 104) selon la revendication 3, dans lequel le rouleau (251) est cylindrique.

5. Dispositif électronique (101, 102, 104) selon la revendication 4, dans lequel le rouleau (251) comprend en outre un boîtier de rouleau cylindrique (401) comprenant un espace d'enceinte pour l'un ou les haut-parleurs (420, 422, 460).

6. Dispositif électronique (101, 102, 104) selon la revendication 5, dans lequel l'un ou les haut-parleurs (420, 422, 460) comprenant :
un premier haut-parleur (420, 450) disposé dans le boîtier de rouleau cylindrique (401) et configuré pour émettre un son dans une première direction orientée dans la direction perpendiculaire à la direction de coulissement du second boîtier (22) ; et
un second haut-parleur (422, 452) disposé dans le boîtier de rouleau cylindrique (401) en face du premier haut-parleur (420, 450) et configuré pour émettre un son dans une seconde direction opposée à la première direction.

7. Dispositif électronique (101, 102, 104) selon la revendication 5, dans lequel le boîtier de rouleau (401) comprend une rainure (41) formée en retrait dans une surface circonférentielle extérieure (40a) de celui-ci de sorte que l'élément de connexion conducteur (30) soit enroulé ou déroulé à partir de la rainure (41).

8. Dispositif électronique (101, 102, 104) selon la revendication 7, dans lequel l'élément de connexion conducteur (30) comprend :
une première portion (310, 312, 314) située à l'intérieur du boîtier de rouleau (401) ; et
une seconde portion dérivée de la première portion (310, 312, 314) et située à l'extérieur du boîtier de rouleau (401) pour être enroulée ou déroulée à partir de la rainure (41).

9. Dispositif électronique (101, 102, 104) selon la revendication 8, dans lequel l'élément de connexion conducteur (30) comprend trois connecteurs (311, 313, 315) comprenant :
un premier connecteur (311, 313, 315) disposé à une extrémité de la première portion (310, 312, 314) et connecté au premier haut-parleur (420, 450) ;
un deuxième connecteur (313) disposé à l'autre extrémité de la première portion (310, 312, 314) et connecté au second haut-parleur (422, 452) ; et
un troisième connecteur (315) disposé à une extrémité de la seconde portion et connecté à la carte de circuit (225).

10. Dispositif électronique (101, 102, 104) selon la revendication 1, dans lequel l'un ou les haut-parleurs (420, 422, 460) sont configurés pour utiliser un espace interne (40b) de l'élément de guidage (25) comme section de résonance acoustique d'enceinte.

11. Dispositif électronique (101, 102, 104) selon la revendication 1, dans lequel le second boîtier (22) est configuré pour coulisser vers l'intérieur ou vers l'extérieur le long d'une direction longitudinale du premier boîtier (21).

12. Dispositif électronique (101, 102, 104) selon la revendication 5, dans lequel le boîtier de rouleau (401) comprend un matériau absorbant acoustique (43) dans l'espace interne (40b).
